# Europäisches Patentamt

# European Patent Office

# Office européen des brevets

(19)

(11) Veröffentlichungsnummer: **0 073 905**
**B1**

(12) ## EUROPÄISCHE PATENTSCHRIFT

(45) Veröffentlichungstag der Patentschrift:
**10.06.87**

(51) Int. Cl.⁴: **C 08 J 9/14,** C 08 L 25/06,
C 08 K 3/18, C 08 K 5/09

(21) Anmeldenummer: **82106330.2**

(22) Anmeldetag: **15.07.82**

(54) **Verfahren zur Herstellung von feinzelligen Schaumstoffen aus Styrolpolymerisaten.**

(30) Priorität: **07.08.81 DE 3131446**

(43) Veröffentlichungstag der Anmeldung:
**16.03.83 Patentblatt 83/11**

(45) Bekanntmachung des Hinweises auf die Patenterteilung:
**10.06.87 Patentblatt 87/24**

(84) Benannte Vertragsstaaten:
**AT BE DE FR GB IT SE**

(56) Entgegenhaltungen:
**DE-A-2 001 426**
**DE-B-1 178 206**
**DE-C-926 206**
**FR-A-1 461 370**

(73) Patentinhaber: **BASF Aktiengesellschaft, Carl-Bosch- Strasse 38, D-6700 Ludwigshafen (DE)**

(72) Erfinder: **Hahn, Klaus, Dr., Im Buegen 9, D-6719 Kirchheim (DE)**
Erfinder: **Weber, Heinz, Dr., Am Wehrhaus 26, D-6718 Gruenstadt (DE)**
Erfinder: **Guenther, Wolfgang, Dr., Keplerstrasse 16, D-6700 Ludwigshafen (DE)**
Erfinder: **Weber, Reinhold, An der steinernen Bruecke 11, D-6704 Mutterstadt (DE)**
Erfinder: **Schillinger, Bernhard, Schopfheimer Strasse 4, D-6800 Mannheim (DE)**

EP 0 073 905 B1

**Beschreibung**

Schaumstoffe aus Styrolpolymerisaten werden nach einem bekannten Verfahren hergestellt durch Aufschmelzen des Kunststoffs in einem Extruder, Vermischen mit einem flüchtigen Treibmittel, Auspressen der Mischung an die Umgebungsatmosphäre und Abkühlen. Zur Erzielung einer gleichmäßigen und feinen Zellstruktur werden dem Styrolpolymerisat Keimbildungsmittel zugesetzt.

In der US-A-2 577 743 ist der Zusatz von 0,04 bis 1 % eines Metallstearats zur Verbesserung des Aufschäumverhaltens und der Zellstruktur von extrudierten Polystyrol-Schaumstoffen beschrieben. Es hat sich gezeigt, daß Bariumstearat ein hochwirksames Keimbildungsmittel ist, das aber wegen seiner Toxizität bei der Handhabung besondere Vorsichtsmaßregeln erfordert. Calciumstearat ist zwar nicht toxisch, seine Wirksamkeit als Keimbildner ist aber nicht ausreichend.

In der DE-C-926 206 wird der Zusatz von Calciumstearat bei der Herstellung von PS-Schaumstoffen nach dem Extrusionsverfahren beschrieben, um die Expansionsgeschwindigkeit des Gels erheblich zu verzögern. Die Entgegenhaltung vermittelt dem Fachmann keine Lehre, PS-Schaumstoffe mit einer gleichmäßigen und sehr feinen Zellstruktur herzustellen.

Der Erfindung lag nun die Aufgabe zugrunde ein hochwirksames nichttoxisches Keimbildungsmittel bereitzustellen.

Es wurde nun gefunden, daß eine Kombination aus einem Calciumsalz einer langkettigen Fettsäure und einer feinteiligen, im Styrolpolymerisat unlöslichen anorganischen Substanz diese Forderungen erfüllt. Gegenstand der Erfindung ist demgemäß ein Verfahren zur Herstellung von Schaumstoffen durch Aufschmelzen eines Styrolpolymerisats, Vermischen mit einem flüchtigen Treibmittel und einem Keimbildungsmittel unter erhöhtem Druck, Entspannen der Mischung auf Atmosphärendruck und Abkühlen des Schaumstoffs, bei dem als Keimbildungsmittel 0,02 bis 2 Gew.% des Calciumsalzes einer langkettigen Fettsäure und 0,01 bis 1 Gew.% Magnesiumoxid, Zinkoxid, Talkum oder Kieselsäure eingesetzt werden.

Die DE-B-1 178 206 beschreibt den Zusatz von Zinkoxid oder Calciumcarbonat bei der Herstellung von PS-Schaumstoffen hoher Dichte unter Verwendung von hydratisierten anorganischen Salzen als Treibmittel. Die Entgegenhaltung gibt keine Lehre für die Herstellung von Schaumstoffen unter Verwendung von flüchtigen Treibmitteln.

In der FR-A-1 461 370 wird bei der Herstellung von PS-Schaumstoffen als Keimbildungsmittel Aluminiumoxid der Teilchengröße 0,5-5 µm, Kieselsäure oder Magnesiumoxid zugesetzt. Die Mitverwendung von Calciumsalzen langkettiger Carbonsäuren als Mittel zur weiteren Verringerung der Zellzahl wird durch die Entgegenhaltung nicht nahegelegt.

Die DE-A-2 001 426 beschreibt u.a. die Verwendung von Metallseifen wie Calciumstearat oder Calciumlaurat als Regler für die Zellgröße und Zellverteilung bei der Herstellung von PS-Schaumstoffen aus aufschäumbaren Harzen, die durch Suspensionspolymerisation hergestellt werden. Die Entgegenhaltung vermittelt jedoch keine Lehre für die Herstellung von PS-Schaumstoffen nach dem Extrusionsverfahren.

Als Styrolpolymerisate kommen neben Polystyrol auch Mischpolymerisate des Styrols mit bis zu 50 Gew.% an Comonomeren, z.B. α-Methylstyrol, Acrylnitril oder Ester der Acryl- oder Methacrylsäure in Frage, sowie mit Kautschuken schlagzäh modifiziertes Polystyrol.

Als Treibmittel eignen sich aliphatische Kohlenwasserstoffe, wie Butan, Pentan oder Hexan; insbesondere aber solche, die erst unter Druck im Polymeren löslich sind, wie Methylchlorid, Fluorchlorkohlenwasserstoffe oder Kohlendioxid. Auch Treibmittelgemische können verwendet werden. Die Treibmittelmenge liegt vorzugsweise zwischen 5 und 20 Gew.%, insbesondere zwischen 8 und 15 Gew.%, bezogen auf das Styrolpolymerisat.

Die eine Komponente der Keimbildnerkombination ist ein Calciumsalz einer langkettigen Fettsäure, vorzugsweise einer solchen mit 10 bis 20 Kohlenstoffatomen. Bevorzugt ist Calciumstearat, daneben ist auch Calciumlaurat gut geeignet. Sie werden in Mengen von 0,02 bis 2, vorzugsweise von 0,05 bis 1 Gew.%, bezogen auf das Styrolpolymerisat, eingesetzt.

Die andere Komponente ist Magnesiumoxid, Zinkoxid, Talkum oder Kieselsäure. Ihre mittlere Teilchengröße beträgt 1 bis 100 µm. Die Substanzen werden in Mengen von 0,01 bis 1 vorzugsweise von 0,05 bis 0,5 Gew.%, bezogen auf das Styrolpolymerisat, eingesetzt.

Daneben können übliche Hilfsmittel, wie Flammschutzmittel, Flammschutzsynergisten, Farbstoffe und Füllstoffe zugesetzt werden.

Zur Herstellung der Schaumstoffe wird das Styrolpolymerisat aufgeschmolzen und mit dem Treibmittel, dem Keimbildungsmittel sowie gegebenenfalls weiteren Zusatzstoffen homogen gemischt. Das Vermischen erfolgt üblicherweise bei Temperaturen zwischen 180° und 280°C, bevorzugt zwischen 200° und 240°C bei einem Druck von 10 bis 250 bar. Bevorzugt ist die kontinuierliche Ausführungsform, bei der auf üblichen Ein- oder Zweiwellenextrudern vermischt wird. Die Mischung wird dann auf Atmosphärendruck entspannt, zweckmäßigerweise durch Auspressen aus einer Düse. Dabei verdampft das Treibmittel und das Styrolpolymerisat expandiert. Es entsteht ein Schaumstoff, dessen Querschnitt je nach der Form und Düse rund oder rechteckig sein kann. Durch Abkühlen stabilisiert sich der Schaumstoff.

Die erfindungsgemäß hergestellten Schaumstoffe zeichnen sich durch eine gleichmäßige und sehr feine Zellstruktur aus. Die Zellzahl liegt oberhalb von 2, vorzugsweise oberhalb von 4 Zellen pro mm.

Die in den Beispielen genannten Teile und Prozente beziehen sich auf das Gewicht.

0 073 905

**Beispiel 1**

30 g gemahlenes Polystyrol wurde mit verschiedenen Keimbildnern vermischt und in einen 1 l-Rührautoklaven gefüllt. Nach Aufpressen von 40 bar $CO_2$ wurde innerhalb von 30 min auf 180°C erhitzt und mit 400 Umdrehungen pro Minute weitere 30 min lang gerührt. Danach wurde unter Abkühlung auf 115°C entspannt. Eigenschaften der erhaltenen Schaumstoffe siehe Tabelle 1.

**Beispiel 2**

Polystyrol wurde mit 12 % eines Treibmittelgemisches aus 70 Teilen Dichlordifluormethan und 30 Teilen Methylchlorid sowie verschiedenen Keimbildnern auf einem Einwellenextruder aufgeschmolzen und aus einer Breitschlitzdüse ausgepreßt. Der Durchsatz betrug 80 kg/h, die Massetemperatur im Extruder 180°C.
Von den entstandenen Schaumstoffen mit den Abmessungen 60 x 200 mm wurden die Raumgewichte und die Zellzahlen bestimmt (Tabelle 2).

**Tabelle 1**

|  | Versuch | Metallseife | Menge % | Zusatz | Menge % | Raumgewicht g/l | Zellzahl Z/mm |
|---|---|---|---|---|---|---|---|
| Vergleichs-versuche | 1 | - | - | - | - | 58 | 0,2 |
|  | 2 | Ba-Stearat | 0,1 | - | - | 60 | 4,0 |
|  | 3 | Ca-Stearat | 0,1 | - | - | 58 | 1,9 |
|  | 4 | Ca-Stearat | 0,1 | Talkum | 0,4 | 65 | 4,5 |
|  | 5 | Ca-Stearat | 0,1 | MgO | 0,4 | 65 | 6,0 |
|  | 6 | Ca-Stearat | 0,1 | $SiO_2$ | 0,4 | 67 | 5,0 |
|  | 7 | Ca-Laurat | 0,5 | ZnO | 0,1 | 62 | 5,0 |

Die Keimbildner hatten folgende mittlere Teilchengröße:

| Ba-Stearat: | 10 μm | Ca-Stearat: | 15 μm |
|---|---|---|---|
| Talkum: | 30 μm | MgO: | 10 μm |
| $SiO_2$: | 4 μm | ZnO: | 15 μm |

**Tabelle 2**

|  | Versuch | Metallseife | Menge % | Zusatz | Menge % | Raumgewicht g/l | Zellzahl Z/mm |
|---|---|---|---|---|---|---|---|
| Vergleichs-versuche | 1 | - | - | - | - | 33,8 | 0,3 |
|  | 2 | Ca-Stearat | 0,6 | - | - | 35,8 | 2,4 |
|  | 3 | Ca-Stearat | 0,6 | MgO | 0,1 | 37,3 | 9,5 |
|  | 4 | Ca-Laurat | 0,3 | MgO | 0,1 | 36,2 | 6,5 |

**Patentansprüche**

1. Verfahren zur Herstellung von Schaumstoffen durch Aufschmelzen eines Styrolpolymerisats, kontinuierliches Vermischen auf einem Extruder mit einem flüchtigen Treibmittel und einem Keimbildungsmittel unter erhöhtem Druck, Entspannen der Mischung auf Atmosphärendruck und Abkühlen des Schaumstoffs, dadurch gekennzeichnet, daß als Keimbildungsmittel 0,02 bis 2 Gew.% des Calciumsalzes einer langkettigen Fettsäure und 0,01 bis 1 Gew.% Magnesiumoxid, Zinkoxid, Talkum oder Kieselsäure mit einer mittleren Teilchengröße zwischen 1 und 100 μm eingesetzt werden, wobei sich die Prozentzahlen auf das Styrolpolymerisat beziehen.

3

2. Verfahren nach Anspruch 1, <u>dadurch gekennzeichnet</u>, daß das Calciumsalz Calciumstearat oder Calciumlaurat ist.

**Claims**

1. A process for the production of a foam by melting a styrene polymer, continuously mixing the melt with a volatile blowing agent and a nucleating agent under superatmospheric pressure in an extruder, letting the mixture down to atmospheric pressure, and cooling the foam, wherein from 0.02 to 2% by weight of the calcium salt of a long-chain fatty acid, and from 0.01 to 1% by weight of magnesium oxide, zinc oxide, talc or silica having a mean particle size of from 1 to 100 μm are employed as the nucleating agent, the percentages being based on the styrene polymer.

2. A process as claimed in claim 1, wherein the calcium salt is calcium stearate or calcium laurate.

**Revendications**

1. Procédé de préparation de mousses par fusion d'polymère styrénique, mélange continu sous une pression accrue, dans une boudineuse, avec un agent progène et un produit formant des germes, détente du mélange à la pression atmosphérique et refroidissement de la mousse, caractérisé en ce que l'on emploie comme produit formant des germes un sel de calcium d'un acide gras à longue chaîne, utilisé en une proportion de 0,02 à 2 % en poids, et de l'oxyde de magnésium, de l'oxyde de zinc, du talc ou de l'acide silicique d'une granulométrie moyenne entre 1 et 100 μm, utilisé en une proportion de 0,01 à 1 % en poids par rapport au polymère styrénique.

2. Procédé suivant la revendication 1, caractérisé en ce que le sel de calcium est du stéarate de calcium ou du laurate de calcium.